# EUROPÄISCHE PATENTSCHRIFT

(11) **EP 2 154 981 B1**
(45) Veröffentlichungstag und Bekanntmachung des Hinweises auf die Patenterteilung: **21.09.2011**
(21) Anmeldenummer: 08716387.9
(22) Anmeldetag: 10.03.2008
(51) Int. Cl.: A23C 7/02, B01D 61/44, B01D 61/46, B01D 61/50, B01D 69/12, B08B 3/08, B08B 9/08, C01D 1/04, C01D 1/38, C01D 1/40, C25B 1/16

(54) **VERFAHREN ZUM BEHANDELN VON FLÜSSIGKEITEN FÜHRENDEN ANLAGEN, INSBESONDERE VON BRAUEREI- UND GETRÄNKEANLAGEN, UND DEREN TEILE, UND VORRICHTUNG ZUM DURCHFÜHREN DES VERFAHRENS**
METHOD FOR THE TREATMENT OF INSTALLATIONS CARRYING LIQUIDS, PARTICULARLY BREWERY AND BEVERAGE INSTALLATIONS, AND THE PARTS THEREOF, AND A DEVICE FOR IMPLEMENTING THE METHOD
PROCÉDÉ DE TRAITEMENT D'INSTALLATIONS GUIDANT DES LIQUIDES, NOTAMMENT D'INSTALLATIONS DE BRASSERIE ET DE BOISSONS, ET DE LEURS CONSTITUANTS, ET DISPOSITIF POUR LA MISE EN OEUVRE DE CE PROCÉDÉ

(30) Priorität: 15.06.2007 DE 102007027705
(43) Veröffentlichungstag der Anmeldung: 24.02.2010
(73) Patentinhaber: Ziemann Ludwigsburg GmbH, 71636 Ludwigsburg (DE)
(72) Erfinder: SAUTTER, Harald, 72762 Reutlingen (DE); MENGER, Hans-Jörg, 68799 Reilingen (DE)
(74) Vertreter: Kastner, Hermann
(86) Internationale Anmeldenummer: PCT/EP2008/001877
(87) Internationale Veröffentlichungsnummer: WO 2008/151679

(56) Entgegenhaltungen:
- EP-A- 0 095 583
- EP-A- 0 347 016
- EP-A- 0 856 351
- FR-A- 2 705 250
- GB-A- 1 011 160
- GB-A- 1 301 784
- US-A- 4 172 779
- US-A- 5 395 497
- US-A- 5 637 204
- US-B1- 6 221 225
- NAPPER ET AL: "Hygiene in food factories of the future" TRENDS IN FOOD SCIENCE AND TECHNOLOGY, ELSEVIER SCIENCE PUBLISHERS, GB, Bd. 18, 21. Dezember 2006 (2006-12-21), Seiten S83-S88, XP005924517 ISSN: 0924-2244
- GILLHAM ET AL: "Cleaning-in-Place of Whey Protein Fouling Deposits" FOOD AND BIOPRODUCTS PROCESSING, INSTITUTION OF CHEMICAL ENGINEERS, RUGBY, GB, Bd. 77, Nr. 2, 1. Juni 1999 (1999-06-01), Seiten 127-136, XP022525348 ISSN: 0960-3085
- WALKER S P ET AL: "Cleaning milking systems using electrolyzed oxidizing water", TRANSACTIONS OF THE AMERICAN SOCIETY OF AGRICULTURAL ENGINEERS, AMERICAN SOCIETY OF AGRICULTURAL ENGINEERS. ST.JOSEPH, MI, US, vol. 48, no. 5, 1 January 2005 (2005-01-01), pages 1827-1823, XP008093474, ISSN: 0001-2351

## Beschreibung

Bei Flüssigkeiten führenden und verarbeitenden Anlagen, insbesondere bei Brauerei- und Getränkeanlagen, bilden sich unvermeidlich Ablagerungen unterschiedlicher Art. Diese müssen schon aus hygienischen Gründen, aber auch zur Aufrechterhaltung eines störungsfreien Betriebes in gewissen Zeitabständen beseitigt werden.

Diese Ablagerungen lassen sich im Allgemeinen nicht mit einer einfachen Spülung mit klarem Wasser beseitigen. Dazu bedarf es zusätzlicher physikalisch und/oder chemisch wirksamer Stoffe im Spülwasser. Als Zusatzstoff wird häufig Natronlauge eingesetzt.

Diese Natronlauge wird in großtechnischen Anlagen aus einer Salzlösung aus Natriumchlorid gewonnen. Die Natronlauge wird in größeren Gebinden oft über weite Strecken zum Einsatzort befördert und dort in Vorratsbehältern gelagert, bis sie zur Behandlung, insbesondere zur Reinigung, der Anlage, benötigt werden und dazu dem Spülwasser zugesetzt werden. Der Transport dieser Stoffe erfordert Spezialgebinde oder Spezialfahrzeuge und ist schon deshalb aufwändig. Außerdem ist dieser Transport mit erheblichen Gefahren verbunden. Nach der Behandlung der Anlage muss das Spülwasser mit dem Zusatzstoff entsorgt werden, was ebenfalls aufwändig ist.

XP 008093474 offenbart ein Verfahren zur Reinigung von Melkgeräten, bei dem durch Elektrodialyse Reinigungslösungen erhalten werden.

Der Erfindung liegt die Aufgabe zugrunde, ein Verfahren zur Behandlung von Flüssigkeiten führender Anlagen anzugeben, das weniger aufwändig als das herkömmlichen Verfahren ist und mit einer geringeren Gefährdung verbunden ist. Diese Aufgabe wird durch ein Verfahren nach Anspruch 1 gelöst.

Dadurch, dass bei dem Verfahren vor Ort in einem Vorratsbehälter aus Salz und Wasser eine Salzlösung hergestellt wird, aus der in einem Reaktor durch Elektrodialyse als Hauptprodukt ein der Ausgangssubstanz entsprechendes Katholyt, zum Beispiel Natronlauge, erzeugt wird, das als Behandlungslösung in einem Lagerbehälter gesammelt wird, von wo es für die Behandlung der Anlage unmittelbar in diese eingeleitet werden kann, entfällt der aufwändige und gefahrbehaftete Transport der Natronlauge über die allgemeinen Verkehrswege zu der Anlage hin.

Dadurch, dass außer dem in einem ersten Lagerbehälter gesammelte Katholyt auch das im Reaktor als Nebenprodukt entstehende Anolyt in einem zweiten Lagerbehälter gesammelt wird, und dadurch, dass nach der Behandlung der Anlage die gebrauchte Behandlungslösung und das Nebenprodukt in einem bestimmten Mengenverhältnis zusammengeführt wird, entsteht daraus eine neutrale Salzlösung, die dem Ausgangsprodukt entspricht. Diese wird in einem dritten Lagerbehälter gesammelt und wird zumindest zum Teil in den Vorratsbehälter für den Reaktor eingeleitet werden. Dadurch verringert sich bei diesem Verfahren der Bedarf an dem Ausgangsprodukt auf die Anfangsmenge und auf gelegentliche geringe Ergänzungsmengen.

Wenn das Verfahren nach Anspruch 2 ausgestaltet wird, wird eine gängige und bewährte Behandlungslösung für die Anlage erreicht. Bei einer Weiterbildung dieses Verfahrens nach Anspruch 3 wird bei dem Reaktor ein besonders günstiges Verhältnis zwischen seinem gerätetechnischen Bauaufwand und der von ihm erzeugten Menge der Behandlungslösung erreicht.

Wenn das Verfahren nach Anspruch 4 ausgestaltet wird, wird der Reaktor vor Verunreinigungen bewahrt und so eine längere störungsfreie Betriebsdauer erreicht.

Wenn das Verfahren nach Anspruch 5 ausgestaltet wird, wird der Reaktor auch dann vor Verunreinigungen bewahrt und bei ihm eine längere störungsfreie Betriebsdauer erreicht, wenn die nach der Behandlung der Anlage aus der gebrauchten Behandlungslösung und dem Nebenprodukt entstandenen Salzlösung in das Verfahren zurückgeführt wird.

Der Erfindung liegt auch die Aufgabe zugrunde, eine Vorrichtung zum Durchführen der Verfahren anzugeben. Diese Aufgabe wird durch eine Vorrichtung nach Anspruch 6 gelöst.

Dadurch, dass der Reaktor einen zwischen zwei Stirnplatten eingespannten Membranblock aufweist, der durch mehrere Membrangruppen gebildet wird, die ihrerseits fünf Membranen aufweisen, und zwar außen je eine nichtpolare Membran, daneben je eine unipolare Membran und in der Mitte eine bipolare Membran, die auf jeder Seite an einem Abstandshalter mit Durchgangsöffnungen bestimmter Art und Anordnung anliegen, kann die als Ausgangslösung dienende Salzlösung von der mit einer Zuflussleitung versehenen einen Stirnplatte aus in den Membranblock eingeleitet werden und darin in bestimmter Weise durch die zwischen den Membranen vorhandenen Kammern hindurchgeleitet werden, wobei infolge der selektiven Wirkung der Membranen, insbesondere der unipolaren Membranen, die Jonen der Salzlösung in zunehmendem Maße voneinander getrennt werden und einmal als Katholyt und einmal als Anolyt der zweiten Stirnplatte zugeleitet werden, von wo sie durch die zugeordnete Abflussleitung als Hauptprodukt in einen Sammelbehälter eingeleitet wird bzw. als Nebenprodukt abgeleitet oder in einen zweiten Sammelbehälter eingeleitet wird. Dadurch dass zumindest an den beiden Enden des Membranblocks je eine Elektrode angeordnet ist, kann die selektive Wirkung der Membranen erheblich gesteigert werden und dabei auch die physikalische und chemische Wirksamkeit des Katholyts als Hauptprodukt gesteigert werden. Dadurch, dass bei den Abstandshaltern einer Membrangruppe oder zweier einander benachbarter Membrangruppen diejenigen Durchgangslöcher, die vom durchlässigen inneren Wandbereich der Abstandshalter abgeschlossen sind, und diejenigen Durchgangslöcher, die mit dem durchlässigen inneren Wandbereich der Abstandshalter in Verbindung stehen, nach unterschiedlichen Anordnungsmustern verteilt angeordnet werden können, können in einzelnen Abschnitten des Membranblockes eine Strömungsrichtung erreicht werden, die der Hauptströmungsrichtung im Membranblock entgegengerichtet ist.

Bei einer Ausgestaltung der Vorrichtung nach Anspruch 7 wird erreicht, dass die unterschiedlichen Leitfunktionen dienenden Durchgangslöcher der Abstandhalter und gegebenenfalls der Membranen in zwei übersichtlichen Gruppen zusammengefasst sind.

Mit einer Ausgestaltung der Vorrichtung nach Anspruch 8 wird ein besonders günstiges Verhältnis zwischen dem gerätetechnischen Aufwand der Vorrichtung und der damit erreichbaren Menge des Hauptproduktes erzielt.

Mit einer Ausgestaltung der Vorrichtung nach Anspruch 9 lassen sich die elektrischen Verhältnisse innerhalb des Membranblockes besser steuern und dadurch die selektive Wirkung der Membranen weiter steigern. Außerdem können dadurch bei zunehmender Größe des Membranblockes möglicherweise auftretende ungünstige Erscheinungen verringert werden.

Im Folgenden wird die Erfindung anhand von in den Zeichnungen dargestellten Ausführungsbeispielen näher erläutert. Darin zeigen:
- Fig. 1: ein Blockschaltbild des Verfahrens;
- Fig. 2: eine perspektivische Ansicht eines Ausführungs- beispieles eines Reaktors für das Verfahren nach Fig. 1;
- Fig. 3: eine teilweise geschnitten dargestellte Seiten- ansicht des Reaktors nach Fig. 2 ;
- Fig. 4: einen ausschnittweise und vergrößert darge- stellten Längsschnitt des Reaktors nach Fig. 2 mit zwei Membrangruppen;
- Fig. 5 + Fig. 6: je einen Grundriss zweier Abstandshalter des Reaktors nach Fig. 2.

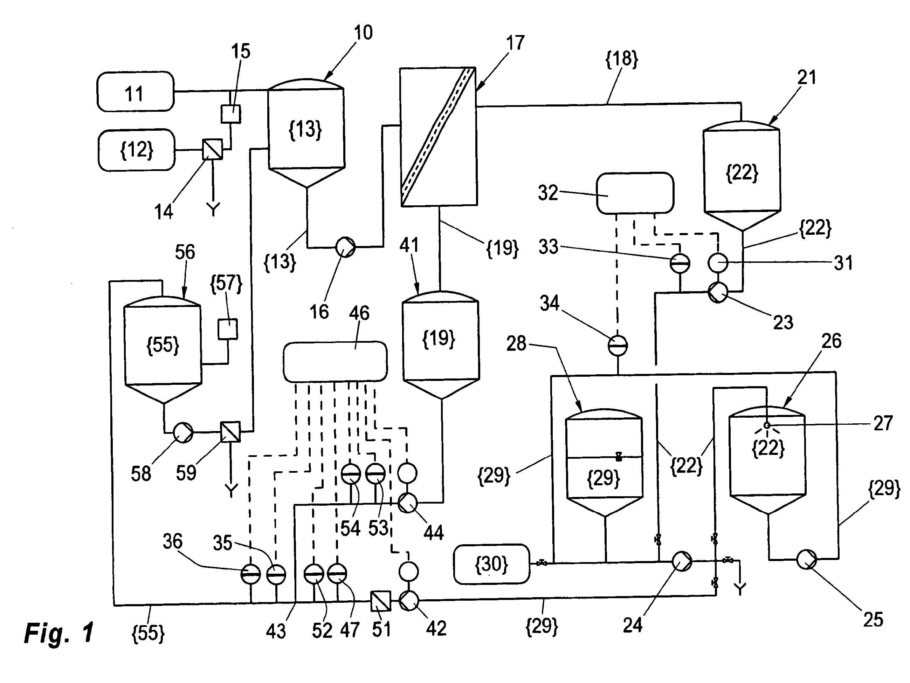

Bei dem Verfahren zum Behandeln von Flüssigkeiten führenden Anlagen, das als Blockschaltbild in Fig. 1 dargestellt ist, wird in einem Vorratsbehälter 10 aus Salz 11 und Wasser 12 eine Salzlösung 13 hergestellt. In Fig. 1 werden die Bezugszeichen für Flüssigkeiten in eine geschweifte Klammer gesetzt, um sie von den Bezugszeichen für Vorrichtungsteile zu unterscheiden.

Das Wasser 12 für die Salzlösung 13 wird in einem Filter 14 von Feststoffen gereinigt und in einem Behandlungsgefäß 15 demineralisiert, was vorzugsweise durch Umkehrosmose oder Ionenaustausch geschieht. Die Salzlösung 13 wird mittels einer Pumpe 16 in einen Reaktor 17 gefördert. In dem Reaktor 17 wird aus der Salzlösung 13 durch Elektrodialyse als Hauptprodukt ein der Ausgangs-Salzlösung entsprechendes Katholyt 18 und als Nebenprodukt ein entsprechendes Anolyt 19 erzeugt. Bei der Verwendung von aufbereitetem und gereinigtem Steinsalz (NaCl) als Ausgangsprodukt entsteht in dem Reaktor 17 als Hauptprodukt 18 Natronlauge (NaOH) und als Nebenprodukt 19 Salzsäure (HCl). Das Hauptprodukt 18, die Natronlauge, wird in einem Lagerbehälter 21 gesammelt. Das Nebenprodukt 19, die Salzsäure, wird in einem zweiten Lagerbehälter 41 gesammelt. Wegen seiner Zweckbestimmung wird das Hauptprodukt im Folgenden auch als Behandlungslösung 22 oder als Reinigungslösung bezeichnet.

Die Behandlungslösung 22 aus dem Lagerbehälter 21 wird mittels Pumpen 23, 24 und 25 zu dem zu behandelnden, d. h. zu reinigenden, Anlagenteil 26 hin gefördert und darin im Allgemeinen mittels Sprühdüsen 27 mit Überdruck auf die Oberflächen des Anlagenteils 26 gesprüht und dieser dadurch gereinigt. In Betracht kommen auch das Reinigen eines Anlagenteils durch teilweises oder vollständiges Fluten und Durchspülen sowie das Reinigen kleinerer Anlagenteile in Tauchbädern.

Verbindungsleitungen des Anlagenteils 26 werden mit der Behandlungslösung 22 voll durchgespült und dadurch gereinigt.

Neben dem Anlagenteil 26 ist ein Stapel- und Pufferbehälter 28 angeordnet, der während des Umlaufs der Behandlungslösung 22 durch den Anlagenteil 26 zumindest eine Teilmenge der Behandlungslösung zu Pufferzwecken aufnimmt, um ein Trockenlaufen der Pumpen 23 bis 25 zu vermeiden. Nach Abschluss der Behandlung des Anlagenteils 26 kann die gebrauchte Behandlungslösung 29 in dem Behälter 28 gestapelt werden, wenn diese Behandlungslösung 29 auch für andere Behandlungszyklen verwendet werden soll und dafür gestapelt werden muss.

Nach der Reinigung des Anlagenteils 26 wird er mit klarem Wasser 30 gespült.

Der Antriebsmotor 31 der Pumpen 23 und ebenso die nicht dargestellten Antriebsmotoren der Pumpen 24 und 25 werden von einem Steuergerät 32 gesteuert. Das Steuergerät 32 erhält seine Steuersignale von einem Durchflussmengenmessgerät 33 und von einem Konzentrationsmessgerät 34.

Nach dem Abschluss der Behandlung des Anlagenteils 26 wird die gebrauchte Behandlungslösung 29 mittels einer Pumpe 42 zu einer Vereinigungsstelle 43 hingefördert. Zu dieser Vereinigungsstelle wird auch das Nebenprodukt 19 aus dem zweiten Lagerbehälter 41 mittels einer Pumpe 44 hingefördert, wo die gebrauchte Behandlungslösung 29 und das Nebenprodukt 19 zusammengeführt werden.

Die gebrauchte Behandlungslösung 29, die von der Pumpe 42 zu der Vereinigungsstelle 43 gefördert wird, wird vor der Vereinigungsstelle 43 durch einen Filter 51 geführt. Dabei werden vor allem Feststoffanteile entfernt.

Außerdem werden bei der gebrauchten Behandlungslösung 29 deren Mengenstrom durch das Durchflussmengenmessgerät 47 und deren Konzentration durch ein Konzentrationsmessgerät 52 sowie bei dem Nebenprodukt 19 dessen Mengenstrom durch ein Durchflussmengenmessgerät 53 und dessen Konzentration durch ein Konzentrationsmessgerät 54 gemessen.

Anhand dieser Messwerte werden die gebrauchte Behandlungslösung 29 und das Nebenprodukt 19 in einem bestimmten Mengenverhältnis zusammengeführt und dadurch zu einer Salzlösung 55 neutralisiert. Eine Überschussmenge der Behandlungslösung 29 oder des Nebenprodukt 19 wird abgeleitet. -

Zusätzlich zu der Messung des Mengenstromes und der Konzentration der gebrauchten Behandlungslösung 29 vor der Vereinigungsstelle 43, oder stattdessen, kann auch nach der Vereinigungsstelle 43 bei der Salzlösung 55 deren Mengenstrom durch ein Durchflussmengenmessgerät 35 und deren Konzentration durch ein Konzentrationsmessgerät 36 gemessen werden und mit diesen Messwerten das Mischen der gebrauchten Behandlungslösung 29 und des Nebenproduktes 19 geregelt werden.

Die Salzlösung 55 wird in einem dritten Lagerbehälter 56 gesammelt. Im Lagerbehälter 56 oder in einem angeschlossenen Behandlungsbehälter wird der Salzlösung 55 ein Flockungsmittel 57 zugesetzt. Die Salzlösung 55 wird mittels einer Pumpe 58 durch einen Filter 59 hindurch in den Vorratsbehälter 10 des Reaktors 17 gefördert. Durch das Flockungsmittel 57 und den Filter 59 wird aus der Salzlösung 55 vor allem eine möglicherweise vorhandene organische Matrix entfernt, um Störungen des Reaktors 17 zu vermeiden.

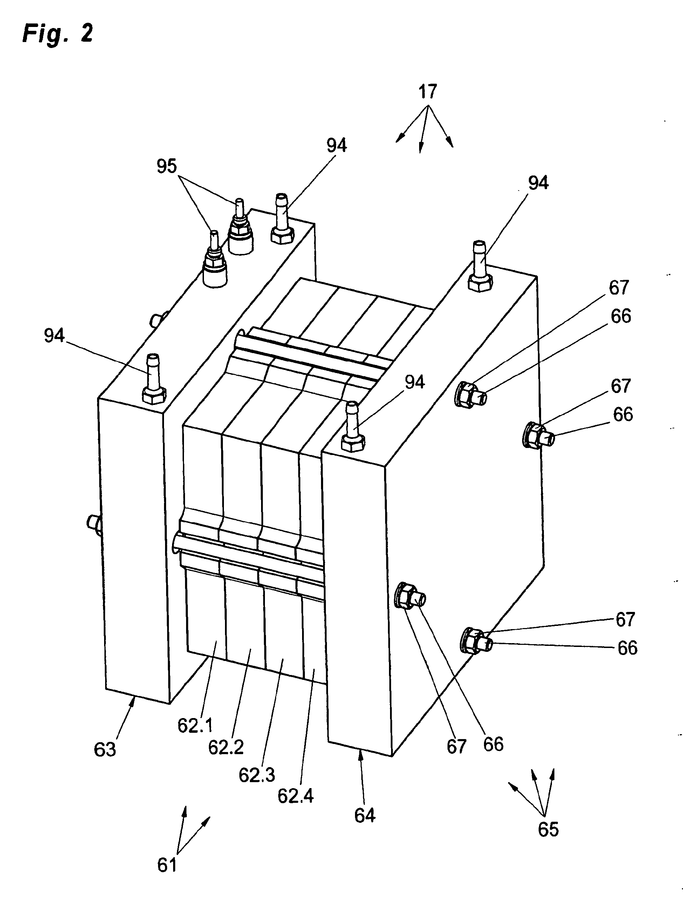

Der in Fig. 1 nur symbolisch als Rechteck dargestellte Reaktor 17 hat in Wirklichkeit eine blockförmige Gestalt. Er wird im Folgenden anhand Fig. 2 bis Fig. 6 näher erläutert.

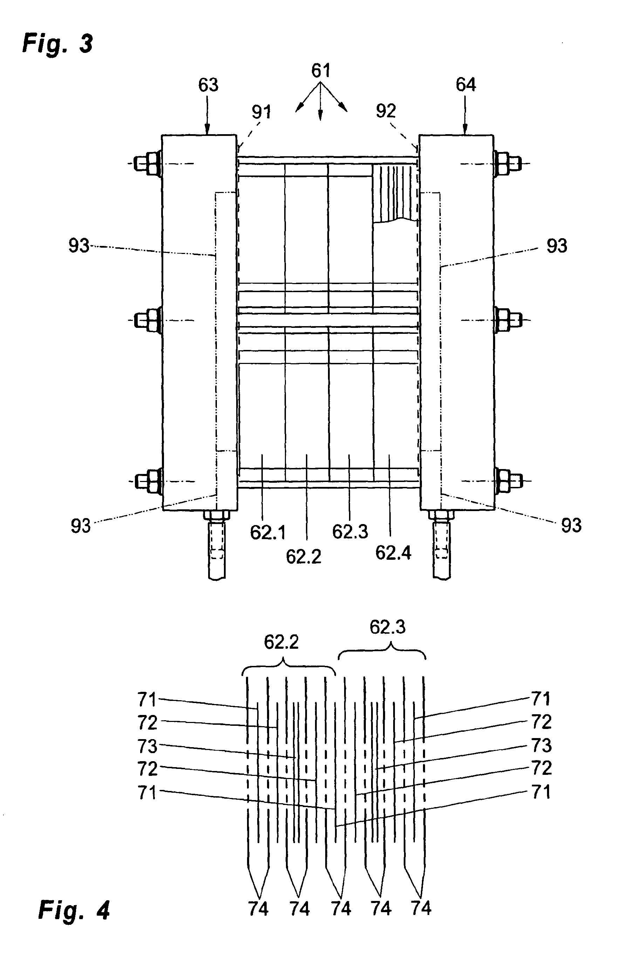

Der Reaktor 17 weist einen Membranblock 61 auf, der durch mehrere Membrangruppen 62 gebildet wird. In der Praxis liegt ihre Anzahl zweckmäßigerweise zwischen 23 und 27 Membrangruppen. Davon sind in Fig. 2 und Fig. 3 lediglich die vier Membrangruppen 62.1 bis 62.4 dargestellt, die durch die angehängten Zusatzzahlen voneinander unterschieden werden. Die Begrenzungslinien zwischen zwei einander benachbarten Membrangruppen sind nur symbolisch zu verstehen und dienen der Veranschaulichung der einzelnen Membrangruppen als Funktionseinheit.

An jedem Ende des Membranblockes 61 ist je eine Stirnplatte 63 bzw. 64 angeordnet, zwischen denen die Membrangruppen 62 des Membranblocks 61 eingespannt sind. Zu diesem Zweck sind vier Spannvorrichtungen 65 vorhanden, die außerhalb des Grundrisses der Membranen angeordnet sind. Jede Spannvorrichtung 65 weist einen Zuganker 66 auf, der an den beiden Enden mit einem Gewinde versehen ist. Darauf ist je eine Mutter 67 aufgeschraubt.

Jede Membrangruppe 62 weist fünf Membranen auf (Fig. 4), und zwar auf den Außenseiten der Membrangruppe je eine nichtpolare Membran 71, daneben je eine unipolare Membran 72 und in der Mitte der Membrangruppe eine bipolare Membran 73. Bei einander benachbarten Membrangruppen ist zwischen ihnen nur eine einzige nichtpolare Membran 71 vorhanden, die beiden benachbarten Membrangruppen gemeinsam ist.

Im Membranblock 61 ist auf jeder Seite einer Membran ein Abstandshalter 74 (Fig. 4 bis Fig. 6) angeordnet. Die Abstandshalter 74 sind als planparallele Platten ausgebildet, die eine Dicke zwischen 0,5 und 1 Millimeter haben.

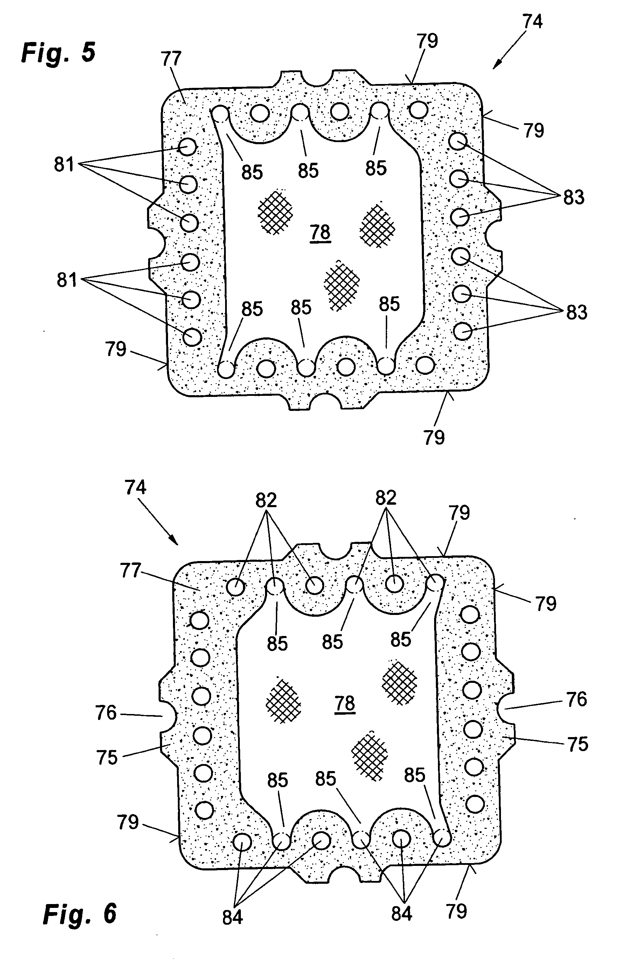

Die in Fig. 5 und Fig. 6 dargestellten Abstandshalter 74 haben einen näherungsweise quadratischen Grundriss. In der Mitte ihrer vier Seiten weisen die Abstandshalter 74 eine Erweiterung 75 auf, in deren Mitte eine U-förmige Aussparung 76 für einen der Zuganker 66 vorhanden ist. Neben der dargestellten Quadratform der Abstandshalter 74 kommt auch eine beliebige Rechteckform in Betracht.

Jeder Abstandshalter 74 hat zwei Wandbereiche, nämlich einen äußeren Wandbereich 77 und einen inneren Wandbereich 78.

Der äußere Wandbereich 77 verläuft entlang des Außenrandes 79 des Abstandhalters 74 und ist ringförmig in sich geschlossen. Dieser äußere Wandbereich 77 ist für die zu verarbeitenden Medien undurchlässig. Der innere Wandbereich 78, der innerhalb des äußeren Wandbereiches 77 gelegen ist, ist für die zu verarbeitenden Medien durchlässig. Zu diesem Zweck hat der innere Wandbereich 78 eine Netzstruktur.

Die Membranen 71, 72 und 73 erstrecken sich mindestens über den gesamten Grundrissbereich des durchlässigen inneren Wandbereiches 78 der Abstandshalter 74. Sie erstrecken sich darüber hinaus bis zum undurchlässigen äußeren Wandbereich 77 der Abstandshalter 74 hin, so dass sie durch diesen äußeren Wandbereich eingespannt sind, wenn die Membranen und die Abstandshalter abwechselnd zu dem Membranblock 61 zusammengefügt und mittels der Stirnplatten 63 und 64 und der Spannvorrichtungen 65 zusammengespannt werden.

Wie aus Fig. 5 und Fig. 6 zu ersehen ist, weist jeder Abstandshalter 74 vier Reihen Durchgangslöcher 81, 82, 83 und 84 auf. Sie sind kreisrund und haben alle den gleichen Durchmesser. Ihr Mittelpunkt liegt auf je einer geraden Linie, die parallel zu dem zugeordneten Abschnitt des Außenrandes 79 des Abstandshalters 74 ausgerichtet ist. Diese Mittelpunktlinien haben von dem zugehörigen Abschnitt des Außenrandes 79 den gleichen Abstand. Die Durchgangslöcher haben untereinander den gleichen Mittenabstand und das gleiche Anordnungsmuster in Bezug auf die Symmetrielinie des Abstandshalters 74. Dadurch liegt der Mittelpunkt eines jeden Durchgangsloches in jeder beliebigen Drehstellung des Abstandshalters 74 in der Fluchtlinie eines der Durchgangslöcher aller Abstandshalter 74, wie ein Vergleich der Fig. 5 und Fig. 6 zeigt..

Die Mittelpunktslinien der Durchgangslöcher 81 und 83 der ersten bzw. der dritten Reihe sind parallel zueinander ausgerichtet. Das Gleiche gilt für die Mittelpunktslinien der Durchgangslöcher 82 und 84 der dritten bzw. vierten Reihe.

Die Durchgangslöcher 81 der ersten Reihe und die Durchgangslöcher 83 der dritten Reihe sind vom durchlässigen inneren Wandbereich 78 des Abstandshalters 74 vollständig abgeschlossen. Von den Durchgangslöchern 82 der zweiten Reihe und den Durchgangslöchern 84 der vierten Reihe ist ein Teil ebenfalls vom durchlässigen inneren Wandbereich 78 des Abstandshalters 74 abgeschlossen, während ein anderer Teil mittels je eines Verbindungskanals 85 mit dem durchlässigen inneren Wandbereich 78 des Abstandshalters 74 in Verbindung steht, d.h. zum durchlässigen inneren Wandbereich 78 hin offen ist. Diejenigen Durchgangslöcher 82 und 84, die vom durchlässigen inneren Wandbereich 78 abgeschlossen sind, und diejenigen Durchgangslöcher 82 und 84, die mit dem durchlässigen inneren Wandbereich 78 in Verbindung stehen, sind alternierend angeordnet. Diese Anordnung kann aber auch anders gewählt werden, um in einer Membrangruppe 62 oder innerhalb mehrerer Membrangruppen 62 bestimmte Strömungswege zu verwirklichen.

Die Durchgangslöcher 81 und 83, die alle vom durchlässigen inneren Wandbereich 78 abgeschlossen sind, bilden Leitungskanäle, die sich im Allgemeinen durch den ganzen Membranblock 61 hindurch erstrecken. Darin können beispielsweise elektrische Leitungen untergebracht werden oder Flüssigkeiten an bestimmte Stellen des Membranblocks geleitet werden.

Bei den Durchgangslöchern 82 und 84 kann das Anordnungsmuster einerseits der abgeschlossenen und andererseits der offenen Durchgangslöcher so gewählt werden, dass die für die Elektrodialyse durch den Membranblock 61 hindurch geleiteten Flüssigkeiten bei bestimmten Abstandshaltern 74 in deren durchlässigen inneren Bereich einströmen und/oder daraus ausströmen können oder auch daran vorbei geleitet werden. Dadurch können in den Membrangruppen 62 die für die Elektrodialyse günstigsten Strömungswege erreicht werden.

Durch eine entsprechende Wahl bei der Verteilung der abgeschlossenen und der offen Durchgangslöcher kann innerhalb einer Membrangruppe oder innerhalb zweier benachbarter Membrangruppen abschnittweise sogar eine Strömungsrichtung erzielt werden, die der Hauptströmungsrichtung im Membranblock 61 entgegengerichtet ist.

Die zwischen den Abstandshaltern 74 angeordneten Membranen sind in denjenigen Flächenbereichen, die sich über den durchlässigen inneren Wandbereich 78 der Abstandshalter 74 hinaus erstrecken, ebenfalls mit Durchgangslöchern versehen, die auf die Durchgangslöcher 81, 82, 83 und 84 der Abstandshaltern 74 abgestimmt sind.

An beiden Enden des Membranblocks 61 ist je eine Elektrode 91 bzw. 92 angeordnet, die in Fig. 3 als gestrichelte Linie dargestellt ist. Dieses Elektrodenpaar steht mit einer nicht dargestellten Gleichspannungsquelle in Verbindung. Bei einem Membranblock mit einer größeren Anzahl Membrangruppen kann es zweckmäßig sein, innerhalb des Membranblocks noch weitere Elektrodenpaare anzuordnen. Diese Elektrodenpaare können mit einer gemeinsamen Gleichspannungsquelle oder einzeln oder gruppenweise mit unterschiedlichen Gleichspannungsquellen verbunden sein.

In jeder der beiden Stirnplatten 63 und 64 sind Kanäle 93 vorhanden, die in Fig. 3 lediglich durch eine Strichpunktlinie angedeutet sind.

An den Außenseiten der Stirnplatten 63 und 64 sind an der Mündung der Kanäle 93 Anschlussstutzen 94 für Zufluss- oder Abflussleitungen für Flüssigkeiten oder Anschlusskupplungen 95 für elektrische Leitungen angeordnet.

An der Innenseite der beiden Stirnplatten 63 und 64 münden die Kanäle 93 in der Fluchtlinie der ihnen zugeordneten Durchgangslöcher 81, 82, 83 und 84 der Abstandshalter 74.

### Bezugszeichenliste

- 10: Vorratsbehälter
- 11: Salz
- 12: Wasser
- 13: Salzlösung
- 14: Filter
- 15: Behandlungsgefäß
- 16: Pumpe
- 17: Reaktor
- 18: Katholyt, Hauptprodukt
- 19: Anolyt, Nebenprodukt

- 21: Lagerbehälter
- 22: Behandlungslösung
- 23: Pumpe
- 24: Pumpe
- 25: Pumpe
- 26: Anlageteil
- 27: Sprühdüse
- 28: Stapel- und Pufferbehälter
- 29: Gebrauchte Behandlungslösung

- 30: Wasser
- 31: Antriebsmotor
- 32: Steuergerät
- 33: Durchflussmengenmessgerät
- 34: Konzentrationsmessgerät
- 35: Durchflussmengenmessgerät
- 36: Konzentrationsmessgerät

- 41: zweiter Lagerbehälter
- 42: Pumpe
- 43: Vereinigungsstelle
- 44: Pumpe
- 45: Restprodukt
- 46: Steuergerät
- 47: Durchflussmengenmessgerät
- 48: Durchflussmengenmessgerät

- 51: Filter
- 52: Konzentrationsmessgerät
- 53: Durchflussmengenmessgerät
- 54: Konzentrationsmessgerät
- 55: Salzlösung
- 56: Dritter Lagerbehälter
- 57: Flockungsmittel
- 58: Pumpe
- 59: Filter

- 61: Membranblock
- 62: Membrangruppen
- 63: Stirnplatte
- 64: Stirnplatte
- 65: Spannvorrichtung
- 66: Zuganker
- 67: Mutter

- 71: nichtpolare Membran
- 72: unipolare Membran
- 73: bipolare Membran
- 74: Abstandshalter
- 75: Erweiterung
- 76: Aussparung
- 77: äußerer Wandbereich
- 78: innerer Wandbereich
- 79: Außenrand

- 81: Durchgangslöcher
- 82: Durchgangslöcher
- 83: Durchgangslöcher
- 84: Durchgangslöcher
- 85: Verbindungskanal

- 91: Elektrode
- 92: Elektrode
- 93: Kanäle
- 94: Anschlussstutzen
- 95: Kupplungen

## Patentansprüche

1. Verfahren zum Behandeln von Flüssigkeiten führenden Anlagen, insbesondere Brauerei- und Getränkeanlagen, und deren Teile, mit den Verfahrensschritten:
- in einem Vorratsbehälter (10) wird aus Salz (11) und Wasser (12) eine Salzlösung (13) hergestellt,
- aus der Salzlösung (13) wird in einem Reaktor (17) durch Elektrodialyse als Hauptprodukt (18) ein der Ausgangssubstanz entsprechendes Katholyt erzeugt, das im Reaktor entstehende Katholyt (18) wird als Behandlungslösung (22) in einem Lagerbehälter (21) gesammelt,
- das im Reaktor (17) als Nebenprodukt (19) entstehende Anolyt wird in einem zweiten Lagerbehälter (41) gesammelt,
- zumindest Teilmengen der-Behandlungslösung (22) aus dem ersten Lagerbehälter (21) werden zumindest durch einzelne Abschnitte der Anlage (26) und/oder deren Teile hindurchgeleitet und dabei diese Abschnitte der Anlage (26) und/oder deren Teile behandelt,
- nach der Behandlung der Abschnitte der Anlage (26) und/oder deren Teile werden die gebrauchte Behandlungslösung (29) und das Nebenprodukt (19) in einem bestimmten Mengenverhältnis zusammengeführt und **dadurch** zumindest annähernd zu einer Salzlösung (55) neutralisiert,
- diese Salzlösung (55) wird in einem dritten Lagerbehälter (56) gesammelt,
- zumindest eine Teilmenge dieser Salzlösung (55) wird in den Vorratsbehälter (10) für den Reaktor (17) eingeleitet.

2. Verfahren nach Anspruch 1, mit den Verfahrensschritten:
- in den Vorratsbehälter (10) für den Reaktor (17) wird als einer der Ausgangsstoffe für die Salzlösung (13) Natriumchlorid eingefüllt.

3. Verfahren nach Anspruch 2, mit dem Verfahrensschritt:
- in dem Reaktor (17) wird als Hauptprodukt Natronlauge erzeugt, die vorzugsweise eine Konzentration von zumindest annähernd zwischen 2 % und 4 % aufweist.

4. Verfahren nach Anspruch 1, mit den Verfahrensschritten:
- das Wasser (12) für die Salzlösung (13) wird vor dem Einleiten in den Vorratsbehälter (10)
- - von Feststoffen gereinigt und
- - demineralisiert, was vorzugsweise durch Umkehrosmose oder durch Jonen-Austausch geschieht.

5. Verfahren nach Anspruch 1, mit dem Verfahrensschritt:
- nach dem Zusammenführen der gebrauchten Behandlungslösung (29) und des Nebenproduktes (19) wird die daraus entstandene Salzlösung (55) gereinigt, insbesondere eine vorhandene organische Matrix entfernt.

6. Vorrichtung zum Durchführen der Verfahren nach einem der Ansprüche 1 bis 5, mit den Merkmalen:
- der Reaktor (17) weist einen Membranblock (61) auf, der durch mehrere Membrangruppen (62) gebildet wird,
- mindestens an jedem Ende des Membranblocks (61) ist je eine Elektrode (91; 92) angeordnet,
- an jedem Ende des Membranblocks (61) ist je eine Stirnplatte (63; 64) angeordnet, die in mindesten zwei Flächenbereichen (75) über den Grundriss der Membranen der Membrangruppen (62) hinausragt,
- es sind mindesten zwei Spannvorrichtungen (65) vorhanden,
- die außerhalb der Membrangruppen (62) angeordnet sind,
- die sich durch darauf abgestimmte Aussparungen der Stirnplatten (63; 64) hindurch erstrecken und
- - mittels der die beiden Stirnplatten (63; 64) gegeneinander verspannt sind,
- jede einzelne Membrangruppe (62) weist 5 Membranen auf, und zwar
- - auf den Außenseiten der Membrangruppe (62) je eine nichtpolare Membran (71),
- - daneben je eine unipolare Membran (72) und
- - in der Mitte eine bipolare Membran (73),
- bei zwei aneinander benachbarten Membrangruppen (62, 2; 62.3) ist zwischen ihnen nur eine einzige gemeinsame nichtpolare Membran (71) vorhanden,
- in dem Membranblock (61) ist auf jeder Seite einer Membran (71; 72; 73) ein Abstandshalter (74) angeordnet,
- jeder Abstandshalter (74) hat zwei Wandbereiche, nämlich
- - einen äußeren Wandbereich (77), der entlang seines Umfanges verläuft und ringförmig in sich geschlossenen ist und der für die zu behandelnden Medien undurchlässig ist, und
- - einen inneren Wandbereich (78), der innerhalb des äußeren Wandbereiches (77) gelegen ist und der für die zu behandelnden Medien durchlässig ist,
- die Membranen (71; 72; 73) sind zumindest im Grundrissbereich des durchlässigen inneren Wandbereiches (78) der Abstandshalter (74) angeordnet und erstrecken sich zumindest zum Teil bis zum undurchlässigen äußeren Wandbereich (77) der Abstandshalter (74) hin,
- jeder Abstandshalter (74) weist in seinem äußeren Wandbereich (77) mehrere Durchgangslöcher (81; 82; 83; 84) auf,
- - die nach einem bestimmten Anordnungsmuster verteilt angeordnet sind,
- - von dienen ein Teil (81; 83) vom durchlässigen inneren Wandbereich (78) des Abstandshalters (74) abgeschlossen ist und
- - von denen ein anderer Teil (82; 84) wenigstens zum Teil mittels eines Verbindungskanals (85) mit dem durchlässigen inneren Wandbereich (78) des Abstandshalters (74) in Verbindung steht,
- bei den Abstandshaltern (74) einer Membrangruppe (62) oder zweier einander benachbarter-Membrangruppen (62.2; 62.3) sind diejenigen Durchgangslöcher (81; 83), die vom durchlässigen inneren Wandbereich (78) der Abstandshalter (74) abgeschlossen sind, und diejenigen Durchgangslöcher (82; 84), die mit dem durchlässigen inneren Wandbereich (78) der Abstandshalter (74) wenigstens zum Teil in Verbindung stehen, nach unterschiedlichen Anordnungsmustern verteilt angeordnet,
- die Membranen (71; 72; 73) weisen in denjenigen Flächenbereichen, die sich über den durchlässigen inneren Wandbereich (78) der Abstandshalter (74) hinaus erstrecken, Durchgangslöcher auf, die auf die Durchgangslöcher (81; 82; 83; 84) der Abstandshalter (74) abgestimmt sind,
- in jeder der beiden Stirnplatten (63; 64) sind Kanäle (63) vorhanden,
- - an die an den Außenseiten der Stirnplatten (63; 64) Zufluss- oder Abflussleitungen (94) für Flüssigkeiten anschließbar sind oder elektrische Leitungen einführbar sind,
- - die an der Innenseite der Stirnplatten (63; 64) in der Fluchtlinie der ihnen zugeordneten Durchgangslöcher 81, 82, 83 und 84 der Abstandshalter 74 münden.

7. Vorrichtung nach Anspruche 6, mit den Merkmalen:
- die Abstandshalter (74) und Membranen (71; 72; 73) haben einen zumindest annähernd rechteckigen Grundriss,
- diejenigen Durchgangslöcher (81; 83), die über mehrere oder über alle Membrangruppen (62) miteinander in Verbindung stehen, sind entlang zweier einander gegenüberliegender Rechteckseiten angeordnet und
- diejenigen Durchgangslöcher (82; 84), die nur innerhalb einer Membrangruppe (62) oder zweier benachbarter Membrangruppen (62.2; 62.3) selektiv miteinander in Verbindung stehen, sind entlang der anderen beiden Rechteckseiten angeordnet.

8. Vorrichtung nach Anspruche 6 oder 7, mit dem Merkmal:
- in dem Membranblock (61) sind zumindest annähernd zwischen 23 und 27 Membrangruppen (62) angeordnet.

9. Vorrichtung nach einem der Ansprüche 6 bis 8, mit den Merkmalen:
- neben den beiden Elektroden (91; 92) an den Enden des Membranblockes (62) sind innerhalb des Membranblockes (61) weitere Elektrodenpaare angeordnet,
- alle Elektrodenpaare sind verbunden
- - entweder gemeinsam mit einer einzigen Spannungsquelle
- - oder einzeln oder gruppenweise mit unterschiedlichen Spannungsquellen.

## Claims

1. A method of treating liquid-carrying installations, in particular brewery and beverage installations, and parts thereof, having the method steps:
- a saline solution (13) is produced in a reservoir (10) from salt (11) and water (12),
- a catholyte corresponding to the initial substance is produced as the main product (18) from the saline solution (13) by electrodialysis in a reactor (17),
- the catholyte (18) arising in the reactor is collected as the treatment solution (22) in a storage vessel (21),
- the anolyte arising in the reactor (17) as the side product (19) is collected in a second storage vessel (41),
- at least partial quantities of the treatment solution (22) from the first storage vessel (12) are led at least through individual portions of the installation (26) and/or its parts and in the process treat these portions of the installation (26) and/or its parts,
- after treatment of the portions of the installation (26) and/or its parts, the spent treatment solution (29) and the side product (19) are brought together in a given proportion and are thereby at least substantially neutralised to form a saline solution (55),
- this saline solution (55) is collected in a third storage vessel (56),
- at least a partial quantity of this saline solution (55) is introduced into the reservoir (10) for the reactor (17).

2. A method according to claim 1, having the method steps:
- sodium chloride is fed into the reservoir (10) for the reactor (17) as one of the initial substances for the saline solution (13).

3. A method according to claim 2, having the method step:
- sodium hydroxide solution, preferably having a strength at least approximately between 2% and 4%, is produced in the reactor (17) as the main product.

4. A method according to claim 1, having the method steps:
- before introduction into the reservoir (10), the water (12) for the saline solution (13) is
- - cleaned of solids and
- - demineralised, this preferably taking place through reverse osmosis or through ion exchange.

5. A method according to claim 1, having the method step:
- after the bringing together of the spent treatment solution (29) and the side product (19), the resultant saline solution (55) is cleaned, in particular a present organic matrix is removed.

6. A device for carrying out the method according to any one of claims 1 to 5, having the features:
- the reactor (17) has a membrane block (61) formed by a plurality of membrane groups (62),
- a respective electrode (91; 92) is arranged at least at each end of the membrane block (61),
- at each end of the membrane block (61) there is arranged a respective end plate (63; 64) which, in at least two surface regions (75), projects out beyond the outline of the membranes of the membrane groups (62),
- at least two clamping devices (65) are present,
- - which are arranged exterior to the membrane groups (62)
- - which extend through appropriate cut-outs in the end plates (63; 64) and
- - by means of which the two end plates (63; 64) are clamped against one another,
- each individual membrane group (62) has 5 membranes, namely
- - a non-polar membrane (71) on each of the outer faces of the membrane group (62),
- - a unipolar membrane (72) beside each membrane (71) and
- - a bipolar membrane (73) in the centre,
- in the case of two adjacent membrane groups (62.2, 62.3), only a single common non-polar membrane (71) is present therebetween,
- a spacer (74) is arranged in the membrane block (61), on each side of a membrane (71; 72; 73),
- each spacer (74) has two wall regions, namely
- - an outer wall region (77), which runs along its circumference and is annularly closed and which is impermeable to the media to be treated, and
- - an inner wall region (78), which is located within the outer wall region (77) and which is permeable to the media to be treated,
- the membranes (71; 72; 73) are arranged at least in the outline region of the permeable inner wall region (78) of the spacers (74) and extend at least partially as far as the impermeable outer wall region (77) of the spacers (74),
- each spacer (74) has a plurality of through holes (81; 82; 83; 84) in its outer wall region (77),
- - which are arranged distributed in accordance with a certain arrangement pattern,
- - of which some (81; 83) are closed by the permeable inner wall region (78) of the spacer (74) and
- - of which some others (82; 84) are at least partially connected to the permeable inner wall region (78) of the spacer (74) by means of a connecting channel (85),
- in the case of the spacers (74) of one membrane group (62) or of two adjacent membrane groups (62.2, 62.3), those through holes (81; 83) which are closed by the permeable inner wall region (78) of the spacers (74) and those through holes (82; 84) which are at least partially connected to the permeable inner wall region (78) of the spacers (74) are arranged distributed in accordance with different arrangement patterns,
- in those surface regions extending beyond the permeable inner wall region (78) of the spacers (74), the membranes (71; 72; 73) have through holes matched to the through holes (81; 82; 83; 84) of the spacers (74),
- in each of the two end plates (63; 64) there are channels (63 sic]),
- - to which feed or discharge lines (94) for fluids are connectable at the exteriors of the end plates (63; 64) or electric lines are insertable,
- -which issue at the inner face of the end plates (63; 64), in alignment with the associated through holes (81, 82, 83 and 84) of the spacers (74).

7. A device according to claim 6, having the features:
- the spacers (74) and membranes (71; 72; 73) have an at least substantially rectangular outline,
- those through holes (81; 83) which are connected to one another via a plurality of membrane groups (62) or all membrane groups (62) are arranged along two facing rectangle sides
- and those through holes (82; 84) which are only selectively connected to one another within one membrane group (62) or two adjacent membrane groups (62.2, 62.3) are arranged along the other two rectangle sides.

8. A device according to claim 6 or 7, having the feature:
- at least approximately between 23 and 27 membrane groups (62) are arranged in the membrane block (61).

9. A device according to any one of claims 6 to 8, having the features:
- further electrode pairs are arranged within the membrane block (61) in addition to the two electrodes (91; 92) at the ends of the membrane block (62),
- all electrode pairs are connected
- - either collectively to a single voltage source
- - or individually or in groups to different voltage sources.

## Revendications

1. Procédé de traitement d'installations traversées par des liquides, notamment des installations de brasserie ou de boissons ou des parties de ces installations, comprenant les étapes suivantes :
- on réalise une solution saline (13) dans un réservoir (10) avec du sel (11) et de l'eau (12),
- à partir de la solution saline (13), on forme dans un réacteur (17), par électrodialyse, comme produit principal (18), un catholyte correspondant à la substance de départ,
- on collecte le catholyte (18) formé dans le réacteur comme solution de traitement (22) dans un réservoir de stockage (21),
- on collecte dans un second réservoir de stockage (41), l'anolyte formé comme sous produit (19) dans le réacteur (17),
- on fait passer au moins des fractions de la solution de traitement (22) du premier réservoir de stockage (21) à travers au moins un certain segment de l'installation (26) et/ou de leurs parties et on traite ainsi ces segments de l'installation (26) et/ou leurs parties,
- après traitement des segments de l'installation (26) et/ou de leurs parties, on collecte la solution de traitement épuisée (29) et le sous-produit (19) selon un certain rapport quantitatif et on neutralise au moins sensiblement en formant une solution saline (55),
- on collecte cette solution saline (55) dans un troisième réservoir de stockage (56), et
- on introduit au moins une fraction de cette solution saline (55) dans le réservoir (10) pour le réacteur (17).

2. Procédé selon la revendication 1,
**caractérisé par** l'étape suivante :
- on introduit du chlorure de sodium dans le réservoir (10) pour le réacteur (17), comme l'une des matières premières de la solution saline (13).

3. Procédé selon la revendication 2,
**caractérisé par** l'étape suivante :
- on forme une lessive de soude comme produit principal, dans le réacteur (17) avec de préférence une concentration comprise sensiblement entre 2 % et 4 %.

4. Procédé selon la revendication 1,
**caractérisé par** les étapes suivantes:
- avant d'introduire l'eau (12) pour la solution saline (13) dans le réservoir (10),
* on la nettoie pour enlever les matières solides, et
* on la déminéralise de préférence par osmose inverse ou par échange ionique.

5. Procédé selon la revendication 1,
**caractérisé par** l'étape suivante :
- après réunion de la solution de traitement épuisée (29) et du sous-produit (19), on nettoie la solution saline (55) obtenue en éliminant notamment la matrice organique qui s'y trouve.

6. Dispositif pour la mise en oeuvre du procédé selon l'une des revendications 1 à 5, ayant les caractéristiques suivantes :
- le réacteur (17) a un bloc à membranes (61) formé par plusieurs groupes de membranes (62),
- une électrode (91, 92) respective à au moins chaque extrémité du bloc à membranes (61),
- à chaque extrémité du bloc à membranes (61), une plaque frontale (63, 64) ayant au moins deux zones de surface (75) qui dépassent de la forme en plan des membranes appartenant aux groupes de membranes (62),
- au moins deux dispositifs de serrage (65),
* situés à l'extérieur des groupes de membranes (62),
* traversant des paires déterminées de plaques frontales (63, 64), et
* serrés l'un contre l'autre par les deux plaques frontales (63, 64),
- chaque groupe de membranes (62) comporte au moins cinq membranes à savoir,
* une membrane non polaire (71) sur le côté extérieur du groupe de membranes (62),
* une membrane unipolaire (72) à côté de celle-ci, et
* une membrane bipolaire (73) au milieu,
- pour deux groupes voisins de membranes (62.2 ; 62.3), seulement une unique membrane non polaire (71), commune entre eux,
- un organe d'écartement (74) dans le bloc de membranes (61), sur chaque côté d'une membrane (71, 72, 73),
- chaque organe d'écartement (74) a deux zones de paroi à savoir,
* une zone de paroi extérieure (77) le long de sa périphérie, de forme annulaire fermée et imperméable aux milieux à traiter, et
* une zone de paroi intérieure (78) située à l'intérieur de la zone de paroi extérieure (77) et est perméable aux milieux à traiter,
- les membranes (71, 72, 73) sont prévues au moins dans la zone du contour de base de la zone de paroi intérieure perméable (78) des organes d'écartement (74) et elles s'étendent au moins en partie jusqu'à la zone de paroi extérieure (77) imperméable des organes d'écartement (74),
- chaque organe d'écartement (74) comporte plusieurs orifices traversants (81, 82, 83, 84) dans sa zone de paroi extérieure (77),
* ils sont répartis suivant un motif de disposition déterminé,
- une partie (81, 83) est fermée par la zone de paroi intérieure perméable (78) de l'organe d'écartement (74), et
* une autre partie (82, 84) de ceux-ci, est en liaison avec la zone de paroi intérieure perméable (78) de l'organe d'écartement (74), par un canal de liaison (85),
- pour les organes d'écartement (74) d'un groupe de membrane (62) ou de deux groupes de membranes (62.2 ; 62.3) voisins, les orifices traversants (81, 83) qui sont fermés par la zone de paroi intérieure (78) perméable des organes d'écartement (74), et les orifices traversants (82, 84) qui communiquent au moins en partie avec la zone de paroi intérieure perméable (78) des organes d'écartement (74), sont répartis suivant différents motifs de disposition,
- dans les zones de surface respectives qui s'étendent au-delà de la zone de paroi intérieure perméable (78) des organes d'écartement (74), les membranes (71, 72, 73) ont des orifices traversants qui sont accordés sur les orifices traversants (81, 82, 83, 84) des organes d'écartement (74),
- chacune des deux plaques frontales (63, 64) a des canaux (63),
* ces canaux pouvant être reliés sur le côté extérieur des plaques frontales (63, 64) à des conduites d'alimentation et d'évacuation (94) de liquide ou à des conduites électriques,
* ces canaux débouchent sur le côté intérieur des plaques frontales (63, 64) dans l'alignement des orifices traversants (81, 82, 83, 84) associés, des organes d'écartement (74).

7. Dispositif selon la revendication 6, comprenant les caractéristiques suivantes :
- les organes d'écartement (74) et les membranes (71, 72, 73) ont au moins une surface de base sensiblement rectangulaire,
- les orifices traversants (81, 83) qui communiquent entre eux par plusieurs ou par tous les groupes de membranes (62), sont disposés le long de deux côtés opposés d'un rectangle, et
- les orifices traversants (82, 84) qui ne communiquent que de manière sélective entre eux dans un groupe de membranes (62) ou de deux groupes de membranes voisins (62.2 ; 62.3), sont répartis le long des deux autres côtés du rectangle.

8. Dispositif selon la revendication 6 ou 7, comprenant la caractéristique suivante :
- le bloc de membranes (61) comporte au moins sensiblement entre 23 et 27 groupes de membranes (62).

9. Dispositif selon l'une des revendications 6 à 8, ayant les caractéristiques suivantes :
- à côté des deux électrodes (91, 92) à l'extrémité du bloc de membranes (62), à l'intérieur du bloc de membranes (61), il y a d'autres paires d'électrodes,
- toutes les paires d'électrodes sont reliées,
* soit en commun à une seule source de tension,
* soit séparément ou par groupe à des sources de tension différentes.
